# EUROPEAN PATENT SPECIFICATION

(11) **EP 4 414 651 B1**
(45) Date of publication and mention of the grant of the patent: **07.10.2026**
(21) Application number: 24156502.7
(22) Date of filing: 08.02.2024
(51) Int. Cl.: F28F 3/04, F28D 9/00

(54) **METHOD FOR MAKING A HEAT EXCHANGER**
VERFAHREN ZUR HERSTELLUNG EINES PLATTENWÄRMETAUSCHERS
PROCÉDÉ DE FABRICATION D'UN ECHANGEUR DE CHALEUR À PLAQUES À EMBOÎTEMENT

(30) Priority: 08.02.2023 US 202318107266
(43) Date of publication of application: 14.08.2024
(73) Proprietor: RTX Corporation, Farmington, CT 06032 (US)
(72) Inventor: WIEDENHOEFER, James F., Windsor, 06095 (US)
(74) Representative: Dehns

(56) References cited:
- CN-A- 110 425 915
- JP-A- H03 279 793
- US-A- 1 662 870
- US-A- 5 849 393
- US-B2- 9 903 669

## Description

### BACKGROUND OF THE DISCLOSURE

This disclosure relates to a method for making a heat exchanger having an interlocking structure.

Casting is frequently used for making components of heat exchangers. The components, for example heat exchange plates, are typically designed or created via investment casting of a 'hot plate' containing a ceramic core. The core is leached out, and this process is followed to produce multiple plates that are stacked and bonded together to create the final assembly.

Much time is required to produce tooling for both the ceramic core and the wax molds, thus making this process time consuming, and also expensive.

Further, casting can result in heat exchanger components that are larger than might be desired. This larger size is needed in order to successfully cast the part, but leads to a heat exchanger that is heavier than is desired. This extra size can be problematic, for example in aerospace applications where space and weight are both sensitive parameters.

US 1662870 A discloses a prior art grooved plate heat interchanger.

JP H03279793A discloses a prior art full heat exchanging element.

US 5849393 A discloses a prior art structural element and method of making said element.

### SUMMARY OF THE DISCLOSURE

The present disclosure relates to a method for making a heat exchanger, wherein plates are machined to a desired shape which allows the heat exchanger components to have smaller dimensions and finer details, and also saves time and cost in the manufacture.

From one aspect, there is provided a method for making a heat exchanger as recited in claim 1.

Features of embodiments are set forth in the dependent claims.
It should be appreciated that the following description and drawings are intended to be exemplary in nature and non-limiting.

### BRIEF DESCRIPTION OF THE DRAWINGS

A detailed description of non-limiting embodiments of the present disclosure follows, with reference to the attached drawings, wherein:
FIG. 1 shows one configuration of an interlocking plate heat exchanger as disclosed herein;
FIG. 2 illustrates a starting plate for machining a plate for a heat exchanger as illustrated in FIG. 1;
FIG. 3 is a perspective view showing a plate after a first machining step as disclosed herein;
FIG. 4 is a side view of the plate of FIG. 3 showing flow passage segments and ribs along one side of the plate;
FIG. 5 is a rotated side view of the plate of FIG. 3 showing flow passage segments and ribs along the other side of the plate;
FIG. 6 illustrates a plunge EDM process for introducing turbulator structures to a flow passage segment of the plate of FIG. 3;
FIGS. 7 and 8 illustrate a plunge EDM tool useful for the step of FIG. 6;
FIG. 9 illustrates the plate of FIG. 3 with turbulators machined into each of the flow passage segments of one side of the plate;
FIG. 10 illustrates a plunge EDM process for introducing turbulators to the other side of the plate of FIG. 3;
FIG. 11 illustrates a reverse side of the plate of FIG. 3 with turbulators machined into each of the flow passage segments of this side of the plate;
FIGS. 12 and 13 illustrate perspective side views of a plate having turbulators of different size on opposite sides of the plate, and with excess portions and alignment features removed;
FIGS. 14 and 15 illustrate an alterative configuration wherein a fin pack is introduced between machined plates as disclosed herein, and showing a receiver pocket to receive rounded edges of the fin pack; and
FIGS. 16 and 17 illustrate interlocking ribs joining adjacent plates as disclosed herein.

### DETAILED DESCRIPTION

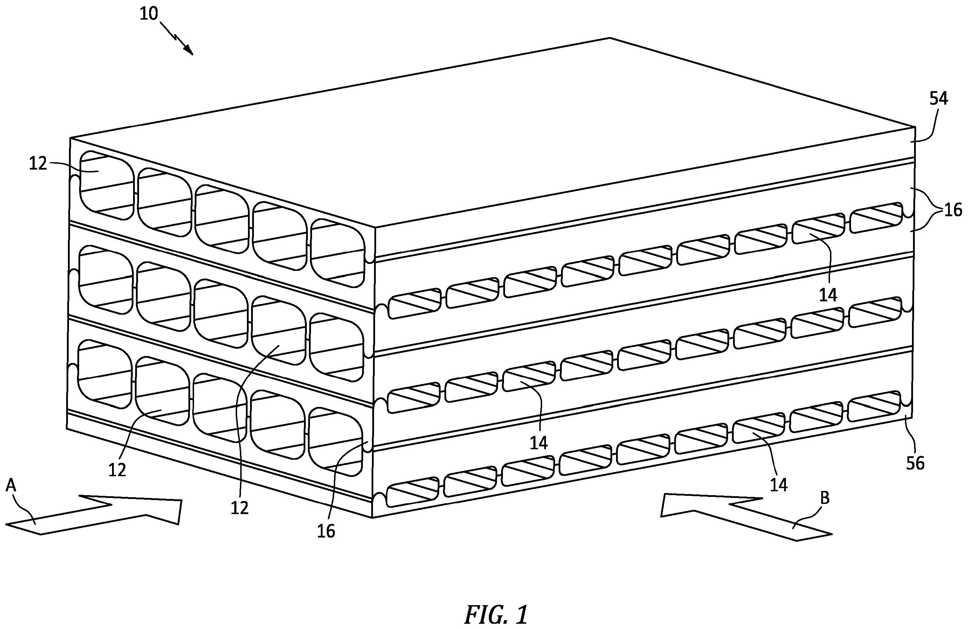

The disclosure relates to a method for making a heat exchanger. FIG. 1 illustrates a heat exchanger 10 according to one non-limiting configuration of this disclosure.

Heat exchanger 10 has a plurality of flow passages 12 defining one flow direction A for a first heat exchange fluid, and a second plurality of flow passages 14 defining a second flow direction B for a second heat exchange fluid. Flow passages 12, 14 are defined by flow passage segments on opposite sides of a plurality of stacked heat exchanger plates 16 as will be further described below.

In one configuration, a method is disclosed for making heat exchanger plates and ultimately the heat exchanger as shown in FIG. 1. The heat exchanger plates are produced by machining to the desired structures, which is an improvement in both time and cost as compared to casting which is typically used to manufacture heat exchanger plates. Specifically, by machining the plates, it is possible to quickly produce plates with dimensions, for example plate thickness, that is smaller than can be produced using conventional casting techniques.

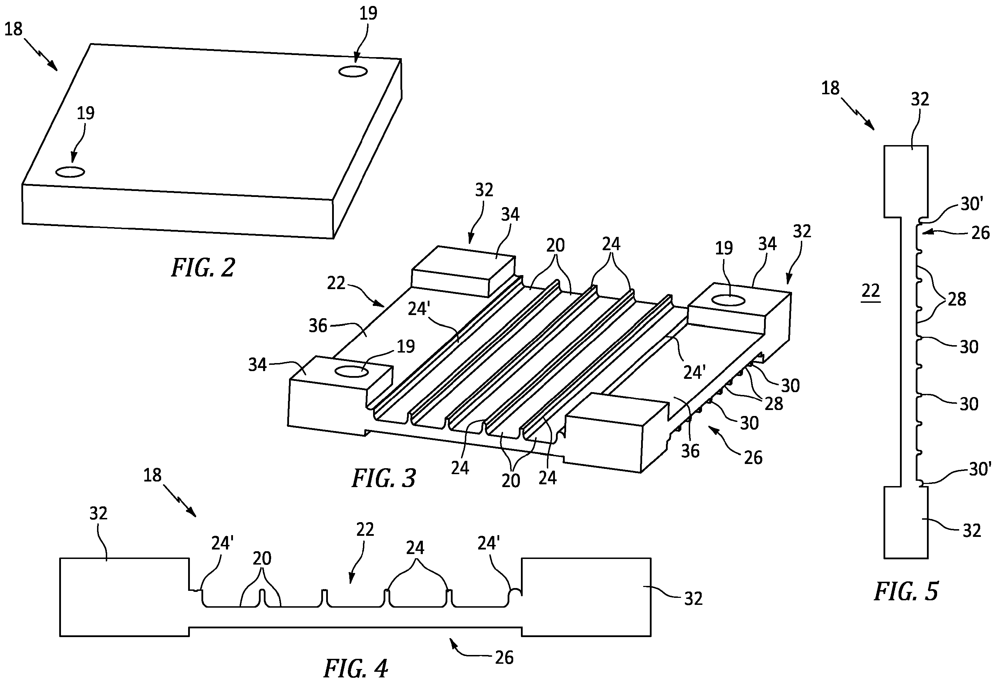

FIG. 2 shows a starting plate 18 of suitable material that can have a starting thickness sufficient to accommodate the maximum desired thickness of the finished plate. Further, starting plate 18 can have one or more alignment features 19, which can be a simple hole passing through the plate as shown, or any other feature that can be used to align the plate with precision for later machining steps. In the illustrated plate 18, alignment features 19 are positioned along side edges of plate 18 as these edges of the plate are wider than the intended finished product, and thus the alignment features are located in a place that does not interfere with the end product.

Plate 18 can be fabricated from any suitable material examples of which include but are not limited to stainless steel, austenitic nickel-chromium-based superalloys such as Inconel and other nickelbased super alloys and the like. Further, the thickness of plate 18 can suitably be at least as thick as the final intended part. Thus, for a plate 16 (FIG. 1) that will have a thickness of about 0.010 inches (0.254 mm), starting plate 18 can have a thickness of about 0.300 inches (7.62 mm) to allow the desired features to be machined into the plate. In one non-limiting configuration, the starting thickness of plate 18 can be based on several parameters, for example parting thickness, 1/2 height of passage 12, and 1/2 height of passage 14. Further, as will be discussed below, when flow passages are machined into plate 18, they are typically machined into both sides of the plate so that a plurality of plates can be stacked to define a multi-layer heat exchanger. The thickness defined herein relates to a thickness between the machined surfaces on both sides of the plate, that is, the narrowest thickness of the plate between machined structures on both of the opposed flat surfaces of the plate.

Plate 18 can be machined, for example using electrical discharge machining or EDM, to remove material and thereby create a first plurality of flow passage segments 20 extending along a first side 22 of plate 18. First flow passage segments 20 are separated by a first plurality of ribs 24 running along segments 20. In the configuration of FIG. 3, five (5) parallel flow passage segments 20 are machined into side 22, separated by four (4) internal ribs 24 and having outer edges defined along thicker ribs 24' in the form of blocker bars to close off the sides of the flow passage of the heat exchanger. These ribs 24' can be thicker as they have greater stress imposed upon them during manufacture and use of the heat exchanger.

Opposing sides of each plate can be machined to provide the desired flow passage segments, and a plate or parting plate thickness can be defined between opposed surfaces of plate 18 which, due to the machining and sintering or brazing steps disclosed herein, can be thinner than can conventionally be accomplished, for example using casting. Plates 18 can advantageously be machined to provide a parting plate thickness of between about 0.005 and about 0.020 inches (0.127 and 0.508 mm).

Internal ribs 24 can have a rib thickness, or width between opposite sides of the rib, of between 0.005 and 0.020 inches (0.127 and 0.508 mm). This is a thinner feature than can be accomplished with casting, and is helpful in producing a heat exchanger that is smaller and/or lighter than was previously possible. External or blocker bar ribs 24' can be provided having a greater thickness to provide additional structural integrity to the heat exchanger, and to help the resulting heat exchanger be more robust during assembly and use. Thus, these ribs 24' can be configured to be thicker or wider than internal ribs 24.

The other side or second side 26 of plate 18 can also be machined to produce a second plurality flow passage segments 28 separated by a second plurality of ribs 30 including thicker ribs 30' in the form of blocker bars along sides of the second plurality of flow passage segments 28. As shown, in order to produce the cross-flow heat exchanger configuration as shown in FIG. 1, first flow passages 20 can be aligned substantially perpendicular to second flow passages 28. Also, the first flow passages 20 and second flow passages 28 can have the same or different dimensions, including different width, height or both. The machining of sides 22, 26 can be done simultaneously or sequentially depending upon the machining equipment and process, and again the alignment features 19 can be used to ensure proper and precise positioning of plate 18 during machining.

In this regard, alignment features according to the invention are intended to be removed during the manufacturing process, and therefore these features 19 are provided in excess material 32, for example in side areas of plate 18 wherein plate 18 is initially sized with excess material beyond the intended width of passage segments 20 and ribs 24, 24' (or passage segments 28 and ribs 30. 30' on the second side 26). FIG. 3 shows excess material 32 including corner squares 34 that are left at original height and central sections 36 of excess material 32 that are machined closer to the same height as ribs 24.

With respect to alignment features 19, it should be appreciated that other structures or methods could be used by persons skilled in the art to assist in accurate machining of the plates. Nevertheless, the disclosed use of alignment features that are on excess plate material that is removed before the plates are stacked is one particularly well suited configuration within the scope of the claims.

FIG. 4 shows a side view of plate 18 after the initial machining step and further illustrates flow passage segments 20 between ribs 24. Because flow passage segments 28 are substantially perpendicular to segments 20, they cannot be seen in the view of FIG. 4.

FIG. 5 shows a rotated side view of the plate 18 of FIG. 3 wherein flow passage segments 28 and ribs 30 can be seen. In the non-limiting configuration of FIGS. 3-5, flow passage segments 20 are wider and greater in height than flow passage segments 28.

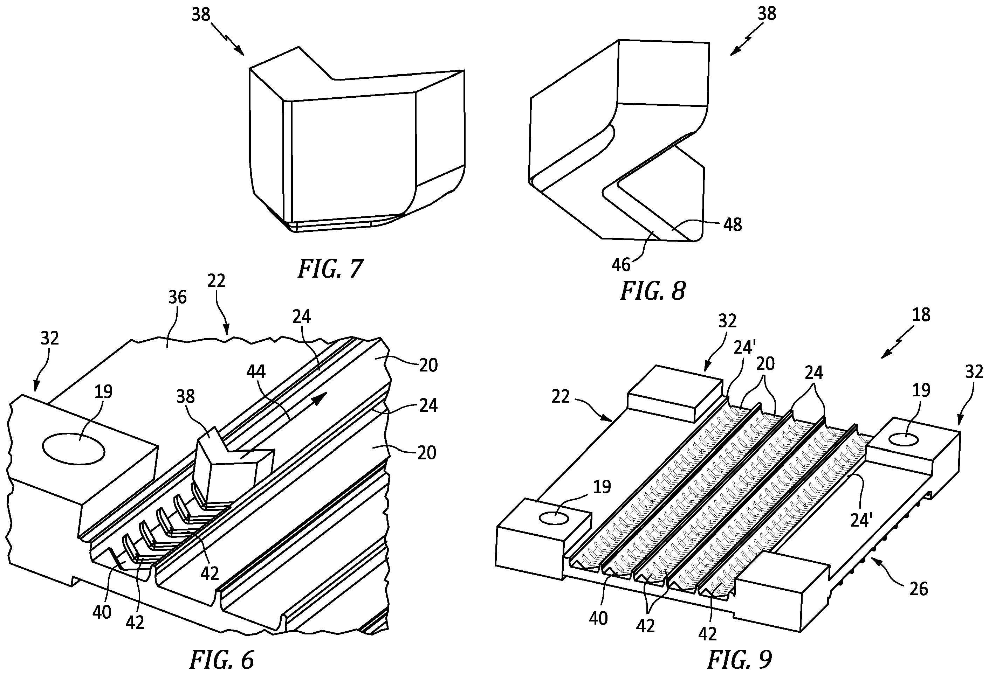

In a heat exchanger that will have separate flow passages 12, 14, such as is shown in FIG. 1, turbulators are frequently utilized to improve flow characteristics through the flow passages. Referring now to FIG. 6, such turbulators can be formed in passage segments 20 using plunge EDM, by applying a plunge EDM tool 38 which, in this example, has a chevron shape that is imparted to the turbulators. As shown in FIG. 6, plunge EDM tool 38 removes a portion of material from a flow surface 40 of flow passage segments 20 to define raised chevron ridges 42 along flow passage segments 20.

FIGS. 7 and 8 show further detail of a suitable plunge EDM tool 38 which is shaped to remove material in sequential positions along flow passage segments 20 as schematically illustrated by arrow 44. As best seen in FIG. 8, a bottom surface of plunge EDM tool can have rounded edges 46 leading to an upwardly offset shoulder 48 that serves to define chevron ridges 42 as turbulators as desired. It should of course be appreciated that turbulators can have other shapes, and when this is desired, a different EDM plunge tool would be used to form the desired turbulator shape.

FIG. 9 shows plate 18 with turbulators in the form of chevron ridges 42 machined into flow surface 40 of each flow passage segment 20 as desired.

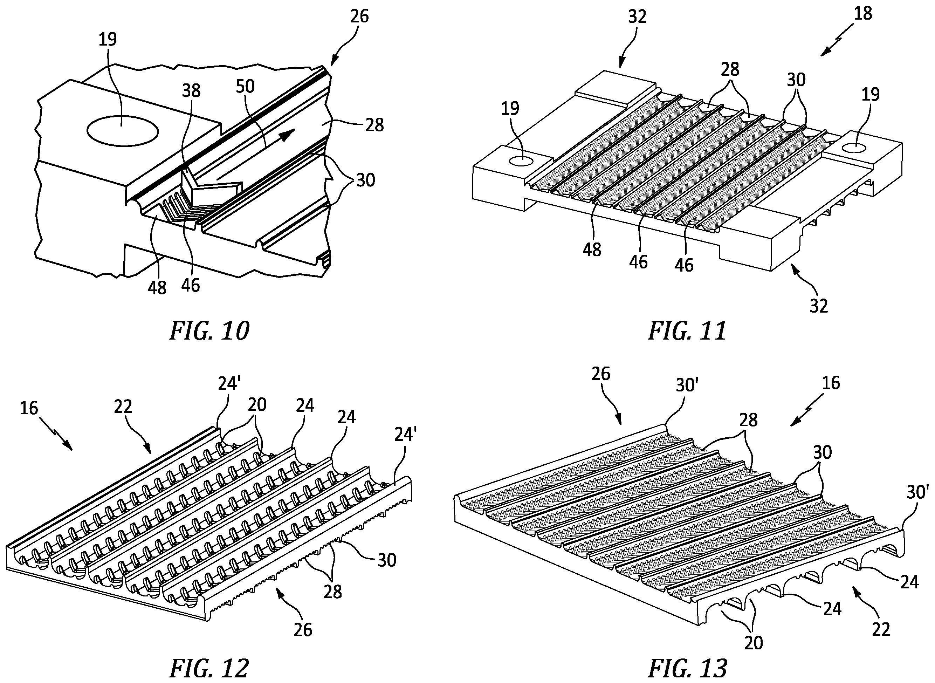

Referring now to FIG. 10, second side 26 of plate 18 can also be treated with a plunge EDM tool 38 to form turbulators in the shape of chevron ridges 46 on flow surface 48 of flow passage segments 28. As with machining the first surface, EDM tool 38 can be applied in spaced positions along each flow passage segment 28 for example along the direction shown at arrow 50. EDM tool 38 for this machining step can be of a different size from the tool used on the first side 22, such that the chevron ridges 46 can have a different height and/or spacing than those on the first side. FIG. 11 shows this process completed, with chevron ridges 46 defined along the flow surface 48 of each flow segment 28.

In the next step, plate 18 can be trimmed to remove excess material 32, leaving a final heat exchanger plate 16 (FIGS. 12 and 13) as desired and as is used in the heat exchanger of FIG. 1.

Heat exchanger plates 16 can then be stacked, in alternating orientation such that first sides 22 of adjacent plates face each other and segments 20 define first flow passages 12 (FIG. 1), and further such that second sides 26 of adjacent plates face each other and segments 28 define second flow passages 14.

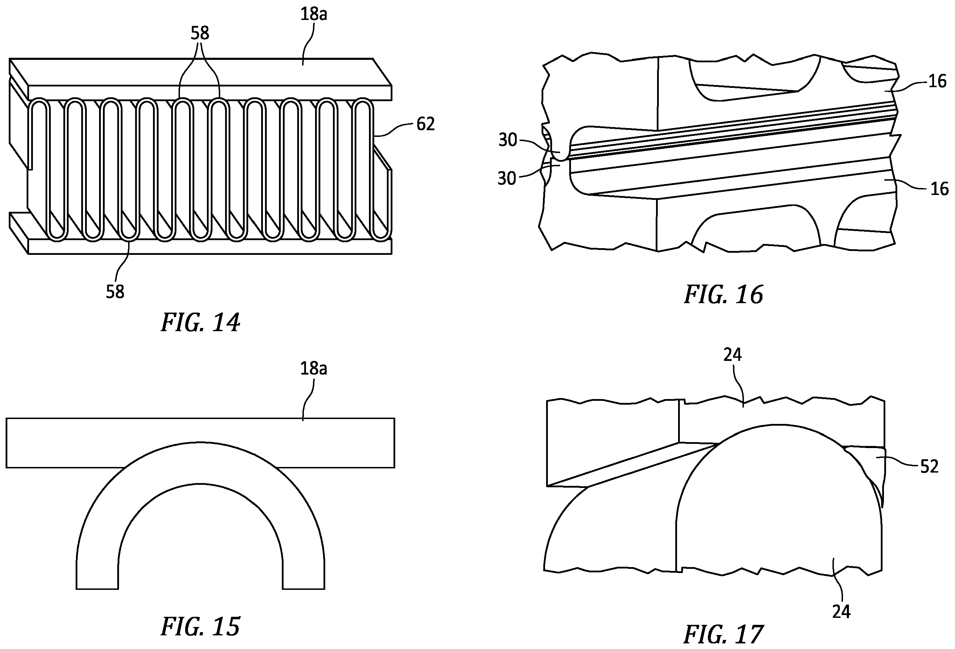

In this regard, it should be noted that ribs 24, 24' and 30, 30', respectively, contact each other between adjacent plates, and these ribs are to be bonded together to make the final heat exchanger. To assist in this process, ribs 24, 24', 30, 30' are preferably machined with interlocking structure such that they readily interact with each other during stacking, and further such that they can be effectively and efficiently bonded together. In one configuration, ribs 24, 24' on first side 22 are machined having alternating convex and concave surfaces such that, when assembled together, a convex rib of one plate contacts a concave rib if an adjacent plate. This interlocking is illustrated in FIGS. 16 and 17. In FIG. 16, two plates 16 are interlocked at ribs 30, 30' and a cross section shows an upper plate 16 having a downwardly convex rib 30 that is convex facing the other plate 16, while the lower plate 16 has a concave rib 30 that is concave facing the other plate such that these structures readily interact and interlock with each other. In the configuration discussed, each plate 16 can have a combination of concave and convex ribs on each side, and can be made such that a single plate configuration can be machined to as many of a plurality of plates as are needed, and then stacked or assembled in alternating manner. Other combinations of concave and convex or other interlocking structures can be machined into ribs of plates as desired, and depending upon the selected structures and configurations, it may be necessary to machine more than one plate configuration in order to stack the plates as desired.

FIG. 17 shows a mirror image configuration wherein a lower rib 24 is convex and the upper rib 24 is concave. Further, FIG. 17 shows that a braze material 52 can be applied onto surfaces of ribs 24 (and also 30), and then during bonding, for example by Field Assisted Sintering Technology (FAST) or Spark Plasma Sintering (SPS) technique, ribs 24, 24' and ribs 30, 30' are firmly bonded together in their interlocking positions.

Referring back to FIG. 1, it should be appreciated that while most plates 16 are machined to define desired structures on both sides 22, 26, a top plate 54 and a bottom plate 56 can be machined with flow passage segments and ribs on only one side, and the outer facing side can be made flat, without features, or can be made with other features, for example features suitable to installation of the heat exchanger in a desired location.

The above disclosure is in terms of a heat exchanger using turbulators in defined flow passages. The present disclosure can also be utilized to manufacture heat exchangers that will use conventional fin packs. When this is to be the case, and referring to FIG. 14, which falls outside the wording of the claims, a starting plate 18a can be initially fabricated of a desired thickness, and grooves 58 can be machined into a surface 60 of plate 18a. A conventional fin pack 62 can then be positioned between plates 18a, and once stacked to the desired number of levels, including side bars (not shown) to close off sides of fin pack 62, the plates 18a can be bonded in place, again using braze where plates 18a are joined to fin pack 62 and bonding using, as one non-limiting example, Field Assisted Sintering Technology (FAST). In this regard, and as shown in exploded view of FIG. 15, which falls outside the wording of the claims, grooves 58 define receiver pockets for the rounded tops or bottoms of fin pack 62, and this serves to greatly improve the quality of bonding as compared to flat topped fin packs.

It should be appreciated that a heat exchanger manufactured as disclosed herein can have plates that are machined from stock material. Further, wire EDM and plunge EDM machining techniques can advantageously be used to rough profile the desired plate, and then add fine details such as turbulators. This construction method allows for short turnaround times in design, manufacture and testing. Further redesigns, when needed, are relatively easy. Furthermore, this method allows for weight savings by reducing the thickness of both the plates and the ribs, these dimensions are no longer limited to what can be done with traditional casting techniques.

## Claims

1. A method for making a heat exchanger (10), comprising:
machining a plate of material (18) having a starting thickness and at least one alignment feature (19), the machining comprising machining down the starting thickness to produce a heat exchanger plate (16; 54; 56) having at least one flow passage segment (20), and at least two ribs (24; 24') arranged extending along each side of the at least one flow segment (20);
removing the at least one alignment feature (19) to provide a trimmed heat exchanger plate (16; 54; 56);
stacking the trimmed heat exchanger plate (16; 54; 56) with a further heat exchanger plate (16; 54; 56) with the at least two ribs (24; 24') interlocked with ribs (24; 24') of the further heat exchanger plate (16; 54; 56), and the at least one flow segment (20) aligned with a flow segment (20) of the further heat exchanger plate (16; 54; 56); and
joining the at least two ribs (24; 24') of the trimmed heat exchanger plate (16; 54; 56) and the ribs (24; 24') of the further heat exchanger plate (16; 54; 56) together,
wherein the machining step produces the heat exchanger plate (16; 54; 56) having the at least one flow passage segment (20) and at least two ribs (24; 24'), and excess material (32) extending in at least one dimension beyond the at least one flow passage segment (20) and the at least two ribs (24; 24'), and wherein the step of removing the at least one alignment feature (19) comprises removing the excess material (32), wherein the alignment feature (19) comprises a hole (19) passing through the excess material (32).

2. The method of claim 1, wherein the joining step comprises a diffusion bonding step.

3. The method of claim 2, further comprising applying braze (52) to at least one of the at least two ribs (24; 24') of the trimmed heat exchanger plate (16; 54; 56) and the ribs (24; 24') of the further heat exchanger plate (16; 54; 56).

4. The method of any preceding claim, further comprising machining the at least two ribs (24; 24') to have interlocking structure.

5. The method of claim 4, wherein the interlocking structure is selected from the group consisting of a convex upward facing surface, a concave upward facing surface, or a combination of a convex upward facing surface and a concave upward facing surface.

6. The method of claim 5, wherein the further heat exchanger plate (16; 54; 56) has ribs (24; 24') that match the at least two ribs (24; 24') such that a convex surface is paired with a concave surface of the at least two ribs (24; 24'), and a concave surface is paired with a convex surface of the at least two ribs (24; 24').

7. The method of any preceding claim, wherein the machining comprises wire-EDM machining.

8. The method of any preceding claim, wherein the machining defines a plurality of machined flow passage segments (20) extending along and defining a flow direction of the heat exchanger plate (16; 54; 56), wherein the at least two ribs (24; 24') comprise a plurality of ribs (24; 24') defined one on each side of each of the plurality of machined flow passage segments (20).

9. The method of any preceding claim, further comprising machining turbulator structures (42) into a surface (40) of the at least one flow passage segment (20).

10. The method of claim 9, wherein the step of further machining turbulator structures (42) comprises plunge-EDM machining of the turbulator structures (42).

11. The method of any preceding claim, further comprising machining each side (22, 26) of the plate of material (18) to produce a heat exchanger plate (16; 54; 56) having the at least one flow passage segment (20; 28) and at least two ribs (24, 30; 24', 30') on each side of the heat exchanger plate (16; 54; 56).

12. The method of any preceding claim, wherein the machining defines the heat exchanger plate (16; 54; 56) having a thickness defined between opposed surfaces of the plate (16; 54; 56) of between 0.005 and 0.020 inches (0.127 and 0.508 mm); and/or wherein the machining defines the heat exchanger (10) having the at least two ribs (24; 24') having a rib thickness of between 0.005 and 0.020 inches (0.127 and 0.508 mm).

13. The method of any preceding claim, wherein the machining comprises machining both sides of a plurality of plates (18) to produce a plurality of heat exchanger plates (16) having the at least one flow passage segment (20) and the at least two ribs (24; 24') on a first side (22), and having a second at least one flow passage segment (28) and at least two ribs (30; 30') on a second side (26).

14. The method of claim 13, wherein the first at least one flow passage segment (20) has different dimensions as compared to the second at least one flow passage segment (28), optionally wherein the stacking step comprises stacking the plurality of heat exchanger plates (16) with the first side (22) of one heat exchanger plate (16) facing the first side (22) of an adjacent heat exchanger plate (16), and with the second side (26) of the one heat exchanger plate (16) facing the second side (26) of another adjacent heat exchanger plate (16), further optionally wherein the at least one flow passage segment (20) on the first side (22) is substantially perpendicular to the at least one flow passage (28) on the second side (26).

15. A heat exchanger (10) made by the method of any preceding claim, comprising a plurality of parting plates (16, 54, 56) bonded together in layers, wherein each parting plate (16, 54, 56) of the plurality of parting plates (16, 54, 56) has opposed surfaces each defining a portion of a heat exchange flow passage (12, 14), and wherein each parting plate (16, 54, 56) has a thickness defined between opposed surfaces of the parting plates (16, 54, 56) of between 0.005 and 0.020 inches (0.127 and 0.508 mm).

## Patentansprüche

1. Verfahren zum Herstellen eines Wärmetauschers (10), umfassend:
Bearbeiten einer Materialplatte (18), die eine Ausgangsdicke und mindestens ein Ausrichtungsmerkmal (19) aufweist, das Bearbeiten umfassend ein Abarbeiten der Ausgangsdicke, um eine Wärmetauscherplatte (16; 54; 56) zu erzeugen, die mindestens ein Strömungsdurchgangssegment (20) und mindestens zwei Rippen (24; 24'), die so angeordnet sind, dass sie sich entlang jeder Seite des mindestens einen Strömungssegments (20) erstrecken, aufweist;
Entfernen des mindestens einen Ausrichtungsmerkmals (19), um eine beschnittene Wärmetauscherplatte (16; 54; 56) bereitzustellen;
Stapeln der beschnittenen Wärmetauscherplatte (16; 54; 56) mit einer weiteren Wärmetauscherplatte (16; 54; 56), wobei die mindestens zwei Rippen (24; 24') mit Rippen (24; 24') der weiteren Wärmetauscherplatte (16; 54; 56) ineinandergreifen und das mindestens eine Strömungssegment (20) an einem Strömungssegment (20) der weiteren Wärmetauscherplatte (16; 54; 56) ausgerichtet ist; und
Aneinanderfügen der mindestens zwei Rippen (24; 24') der beschnittenen Wärmetauscherplatte (16; 54; 56) und der Rippen (24; 24') der weiteren Wärmetauscherplatte (16; 54; 56),
wobei der Bearbeitungsschritt die Wärmetauscherplatte (16; 54; 56), die das mindestens eine Strömungsdurchgangssegment (20) und mindestens zwei Rippen (24; 24') aufweist, und überschüssiges Material (32) erzeugt, das sich in mindestens einer Dimension über das mindestens eine Strömungsdurchgangssegment (20) und die mindestens zwei Rippen (24; 24') hinaus erstreckt, und wobei der Schritt des Entfernens des mindestens einen Ausrichtungsmerkmals (19) ein Entfernen des überschüssigen Materials (32) umfasst, wobei das Ausrichtungsmerkmal (19) ein durch das überschüssige Material (32) hindurch verlaufendes Loch (19) umfasst.

2. Verfahren nach Anspruch 1, wobei der Aneinanderfügungsschritt einen Diffusionsverbindungsschritt umfasst.

3. Verfahren nach Anspruch 2, ferner umfassend ein Aufbringen von Hartlot (52) auf mindestens eine der mindestens zwei Rippen (24; 24') der beschnittenen Wärmetauscherplatte (16; 54; 56) und die Rippen (24; 24') der weiteren Wärmetauscherplatte (16; 54; 56).

4. Verfahren nach einem der vorhergehenden Ansprüche, ferner umfassend ein Bearbeiten der mindestens zwei Rippen (24; 24'), sodass sie eine Struktur zum Ineinandergreifen aufweisen.

5. Verfahren nach Anspruch 4, wobei die Struktur zum Ineinandergreifen aus der Gruppe bestehend aus einer konvexen nach oben gewandten Oberfläche, einer konkaven nach oben gewandten Oberfläche oder einer Kombination aus einer konvexen nach oben gewandten Oberfläche und einer konkaven nach oben gewandten Oberfläche ausgewählt ist.

6. Verfahren nach Anspruch 5, wobei die weitere Wärmetauscherplatte (16; 54; 56) Rippen (24; 24') aufweist, die derart mit den mindestens zwei Rippen (24; 24') zusammenpassen, dass eine konvexe Oberfläche mit einer konkaven Oberfläche der mindestens zwei Rippen (24; 24') gepaart ist und eine konkave Oberfläche mit einer konvexen Oberfläche der mindestens zwei Rippen (24; 24') gepaart ist.

7. Verfahren nach einem der vorhergehenden Ansprüche, wobei das Bearbeiten ein Drahterodieren umfasst.

8. Verfahren nach einem der vorhergehenden Ansprüche, wobei das Bearbeiten eine Vielzahl von bearbeiteten Strömungsdurchgangssegmenten (20) definiert, die sich entlang der Wärmetauscherplatte (16; 54; 56) erstrecken und eine Strömungsrichtung dieser definieren, wobei die mindestens zwei Rippen (24; 24') eine Vielzahl von Rippen (24; 24') umfassen, von denen jeweils eine auf jeder Seite jedes der Vielzahl von bearbeiteten Strömungsdurchgangssegmenten (20) definiert ist.

9. Verfahren nach einem der vorhergehenden Ansprüche, ferner umfassend das Einarbeiten von Turbulatorstrukturen (42) in eine Oberfläche (40) des mindestens einen Strömungsdurchgangssegments (20).

10. Verfahren nach Anspruch 9, wobei der Schritt des weiteren Bearbeitens von Turbulatorstrukturen (42) ein Senkerodieren der Turbulatorstrukturen (42) umfasst.

11. Verfahren nach einem der vorhergehenden Ansprüche, ferner umfassend ein Bearbeiten jeder Seite (22, 26) der Materialplatte (18), um eine Wärmetauscherplatte (16; 54; 56), die das mindestens eine Strömungsdurchgangssegment (20; 28) und mindestens zwei Rippen (24, 30; 24', 30') auf jeder Seite der Wärmetauscherplatte (16; 54; 56) aufweist, zu erzeugen.

12. Verfahren nach einem der vorhergehenden Ansprüche, wobei das Bearbeiten die Wärmetauscherplatte (16; 54; 56), aufweisend eine zwischen einander gegenüberliegenden Oberflächen der Platte (16; 54; 56) definierte Dicke zwischen 0,005 und 0,020 Zoll (0,127 und 0,508 mm), definiert; und/oder wobei das Bearbeiten den Wärmetauscher (10), aufweisend die mindestens zwei Rippen (24; 24'), die eine Rippendicke zwischen 0,005 und 0,020 Zoll (0,127 und 0,508 mm) aufweisen, definiert.

13. Verfahren nach einem der vorhergehenden Ansprüche, wobei das Bearbeiten ein Bearbeiten beider Seiten einer Vielzahl von Platten (18) umfasst, um eine Vielzahl von Wärmetauscherplatten (16), die auf einer ersten Seite (22) das mindestens eine Strömungsdurchgangssegment (20) und die mindestens zwei Rippen (24; 24') aufweisen und auf einer zweiten Seite (26) ein zweites mindestens ein Strömungsdurchgangssegment (28) und mindestens zwei Rippen (30; 30') aufweisen, zu erzeugen.

14. Verfahren nach Anspruch 13, wobei das erste mindestens eine Strömungsdurchgangssegment (20) im Vergleich zu dem zweiten mindestens einen Strömungsdurchgangssegment (28) andere Abmessungen aufweist, wobei der Stapelschritt optional ein Stapeln der Vielzahl von Wärmetauscherplatten (16) derart umfasst, dass die erste Seite (22) einer Wärmetauscherplatte (16) der ersten Seite (22) einer benachbarten Wärmetauscherplatte (16) zugewandt ist und dass die zweite Seite (26) der einen Wärmetauscherplatte (16) der zweiten Seite (26) einer anderen benachbarten Wärmetauscherplatte (16) zugewandt ist, wobei optional ferner das mindestens eine Strömungsdurchgangssegment (20) auf der ersten Seite (22) im Wesentlichen senkrecht zu dem mindestens einen Strömungsdurchgang (28) auf der zweiten Seite (26) ist.

15. Wärmetauscher (10), der durch das Verfahren nach einem der vorhergehenden Ansprüche hergestellt ist, umfassend eine Vielzahl von Trennplatten (16, 54, 56), die in Schichten miteinander verbunden sind, wobei jede Trennplatte (16, 54, 56) der Vielzahl von Trennplatten (16, 54, 56) einander gegenüberliegende Oberflächen aufweist, die jeweils einen Abschnitt eines Wärmetauscherströmungsdurchgangs (12, 14) definieren, und wobei jede Trennplatte (16, 54, 56) eine zwischen einander gegenüberliegenden Oberflächen der Trennplatten (16, 54, 56) definierte Dicke zwischen 0,005 und 0,020 Zoll (0,127 und 0,508 mm) aufweist.

## Revendications

1. Procédé de fabrication d'un échangeur de chaleur (10), comprenant :
l'usinage d'une plaque de matériau (18) ayant une épaisseur initiale et au moins un élément d'alignement (19), l'usinage comprenant la réduction de l'épaisseur initiale pour produire une plaque d'échangeur de chaleur (16 ; 54 ; 56) ayant au moins un segment de passage d'écoulement (20) et au moins deux nervures (24 ; 24') disposées s'étendant de chaque côté du au moins un segment d'écoulement (20) ;
la suppression du au moins un élément d'alignement (19) pour fournir une plaque d'échangeur de chaleur découpée (16 ; 54 ; 56) ;
l'empilement de la plaque d'échangeur de chaleur découpée (16 ; 54 ; 56) avec une autre plaque d'échangeur de chaleur (16 ; 54 ; 56) de manière que les au moins deux nervures (24 ; 24') soient imbriquées avec les nervures (24 ; 24') de l'autre plaque d'échangeur de chaleur (16 ; 54 ; 56), et que le au moins un segment d'écoulement (20) soit aligné avec un segment d'écoulement (20) de l'autre plaque d'échangeur de chaleur (16 ; 54 ; 56) ; et
l'assemblage des au moins deux nervures (24 ; 24') de la plaque d'échangeur de chaleur découpée (16 ; 54 ; 56) et les nervures (24 ; 24') de l'autre plaque d'échangeur de chaleur (16 ; 54 ; 56),
dans lequel l'étape d'usinage produit la plaque d'échangeur de chaleur (16 ; 54 ; 56) ayant le au moins un segment de passage d'écoulement (20) et au moins deux nervures (24 ; 24'), et un excédent de matériau (32) s'étendant dans au moins une dimension au-delà du au moins un segment de passage d'écoulement (20) et des au moins deux nervures (24 ; 24'), et dans lequel l'étape de suppression du au moins un élément d'alignement (19) comprend la suppression de l'excédent de matériau (32), dans lequel l'élément d'alignement (19) comprenant un trou (19) traversant l'excédent de matériau (32).

2. Procédé selon la revendication 1, dans lequel l'étape d'assemblage comprend une étape de soudage par diffusion.

3. Procédé selon la revendication 2, comprenant en outre l'application de brasure (52) sur au moins une des au moins deux nervures (24 ; 24') de la plaque d'échangeur de chaleur découpée (16 ; 54 ; 56) et sur les nervures (24 ; 24') de l'autre plaque d'échangeur de chaleur (16 ; 54 ; 56).

4. Procédé selon une quelconque revendication précédente, comprenant en outre l'usinage des au moins deux nervures (24 ; 24') pour avoir une structure d'emboîtement.

5. Procédé selon la revendication 4, dans lequel la structure d'emboîtement est choisie dans le groupe constitué d'une surface convexe orientée vers le haut, d'une surface concave orientée vers le haut ou d'une combinaison d'une surface convexe orientée vers le haut et d'une surface concave orientée vers le haut.

6. Procédé selon la revendication 5, dans lequel l'autre plaque d'échangeur de chaleur (16 ; 54 ; 56) comporte des nervures (24 ; 24') qui correspondent aux au moins deux nervures (24 ; 24') de sorte qu'une surface convexe soit associée à une surface concave des au moins deux nervures (24 ; 24'), et qu'une surface concave soit associée à une surface convexe des au moins deux nervures (24 ; 24').

7. Procédé selon une quelconque revendication précédente, dans lequel l'usinage comprend un usinage par électro-érosion à fil.

8. Procédé selon une quelconque revendication précédente, dans lequel l'usinage définit une pluralité de segments de passage d'écoulement usinés (20) s'étendant le long et définissant une direction d'écoulement de la plaque de l'échangeur de chaleur (16 ; 54 ; 56), dans lequel les au moins deux nervures (24 ; 24') comprennent une pluralité de nervures (24; 24') définies une de chaque côté de chacun de la pluralité de segments de passage d'écoulement usinés (20).

9. Procédé selon une quelconque revendication précédente, comprenant en outre l'usinage de structures de turbulateur (42) dans une surface (40) du au moins un segment de passage d'écoulement (20).

10. Procédé selon la revendication 9, dans lequel l'étape d'usinage ultérieur de structures de turbulateur (42) comprend un usinage par électro-érosion par plongée des structures de turbulateur (42).

11. Procédé selon une quelconque revendication précédente, comprenant en outre l'usinage de chaque côté (22, 26) de la plaque de matériau (18) pour produire une plaque d'échangeur de chaleur (16 ; 54 ; 56) ayant le au moins un segment de passage d'écoulement (20 ; 28) et au moins deux nervures (24, 30 ; 24', 30') de chaque côté de la plaque d'échangeur de chaleur (16 ; 54 ; 56).

12. Procédé selon une quelconque revendication précédente, dans lequel l'usinage définit la plaque d'échangeur de chaleur (16 ; 54 ; 56) ayant une épaisseur définie entre les surfaces opposées de la plaque (16 ;54 ;56) comprise entre 0,005 et 0,020 pouces (0,127 et 0,508 mm) ; et/ou dans lequel l'usinage définit l'échangeur de chaleur (10) ayant les au moins deux nervures (24 ; 24') ayant une épaisseur de nervure comprise entre 0,005 et 0,020 pouces (0,127 et 0,508 mm).

13. Procédé selon une quelconque revendication précédente, dans lequel l'usinage comprend l'usinage des deux côtés d'une pluralité de plaques (18) pour produire une pluralité de plaques d'échangeur de chaleur (16) ayant le au moins un segment de passage d'écoulement (20) et les au moins deux nervures (24 ; 24') sur un premier côté (22), et ayant un second au moins un segment de passage d'écoulement (28) et au moins deux nervures (30 ; 30') sur un second côté (26).

14. Procédé selon la revendication 13, dans lequel le premier au moins un segment de passage d'écoulement (20) présente des dimensions différentes de celles du second au moins un segment de passage d'écoulement (28), et, éventuellement, dans lequel l'étape d'empilement comprend l'empilement de la pluralité de plaques d'échangeur de chaleur (16) avec le premier côté (22) d'une plaque d'échangeur de chaleur (16) face au premier côté (22) d'une plaque d'échangeur de chaleur (16) adjacente, et avec le second côté (26) d'une plaque d'échangeur de chaleur (16) face au second côté (26) d'une autre plaque d'échangeur de chaleur (16) adjacente, éventuellement en outre, dans lequel le au moins un segment de passage d'écoulement (20) du premier côté (22) est sensiblement perpendiculaire au au moins un passage d'écoulement (28) sur le second côté (26).

15. Échangeur de chaleur (10) fabriqué selon le procédé d'une quelconque revendication précédente, comprenant une pluralité de plaques de séparation (16, 54, 56) collées ensemble en couches, dans lequel chaque plaque de séparation (16, 54, 56) de la pluralité de plaques de séparation (16, 54, 56) a des surfaces opposées définissant chacune une partie d'un passage d'écoulement d'échange de chaleur (12, 14), et dans lequel chaque plaque de séparation (16, 54, 56) a une épaisseur définie entre les surfaces opposées des plaques de séparation (16, 54, 56) comprise entre 0,005 et 0,020 pouces (0,127 et 0,508 mm).
